# EUROPEAN PATENT APPLICATION

(11) **EP 4 729 579 A1**
(43) Date of publication of application: **22.04.2026**
(21) Application number: 24911450.5
(22) Date of filing: 27.12.2024
(51) Int. Cl.: C08L 77/02, C08K 7/14, C08K 5/3492, C08K 3/04, C08K 5/098

(54) **POLYAMIDE COMPOSITE MATERIAL, PREPARATION METHOD THEREFOR, AND USE THEREOF**

(30) Priority: 29.12.2023 CN 202311851347
(71) Applicant: Hangzhou Bosom New Materials Technology Co., Ltd., Hangzhou, Zhejiang 311106 (CN); Bosom New Materials Technology (Wuhu) Co., Ltd., Wuhu, Anhui 241100 (CN)
(72) Inventor: LIU, Lang, Hangzhou, Zhejiang 311106 (CN); ZHANG, Meirong, Hangzhou, Zhejiang 311106 (CN); ZHOU, Zhiyang, Hangzhou, Zhejiang 311106 (CN); BU, Yangfan, Hangzhou, Zhejiang 311106 (CN); DONG, Baoping, Hangzhou, Zhejiang 311106 (CN); DING, Guangjun, Hangzhou, Zhejiang 311106 (CN); YUE, Xiao, Hangzhou, Zhejiang 311106 (CN); ZHOU, Yongsong, Hangzhou, Zhejiang 311106 (CN)
(74) Representative: Cabinet Becker et Associés
(86) International application number: PCT/CN2024/143119
(87) International publication number: WO 2025/140530

(57) **Abstract**

Disclosed in the present application is a MCA flame-retardant black polyamide composite material capable of high-definition laser marking, which comprises the following components in parts by weight: 50-74 parts of a nylon resin, 20-40 parts of glass fibers, 5-13 parts of a MCA flame retardant, 0.1-0.5 part of carbon black, 0.2-0.6 part of a lubricant, and 0-0.5 part of an antioxidant, the nylon resin being one or two of PA6 and PA66 of which the relative viscosity is 2.0-2.4, and the average particle size of MCA being 5-10 µm. The present application applies the low-viscosity nylon resin, thus ensuring excellent processing flowability; by means of selecting the components in the formula, the problem of non-uniform dispersion during combination use of MCA and carbon black is solved, thus reducing the adverse effect on carbon black dispersity caused by the lubricating effect of MCA, and improving the flame retardance and high CTI performance of the material. Therefore, the present application achieves better high-definition black-on-white laser marking performance while keeping good flame retardance and high CTI. In addition, the present application does not need adding an expensive laser marking agent, graphene and the like for achieving the high-definition black-on-white laser marking and therefore has a low cost.

## Description

This application claims the priority of Chinese Patent Application No. 202311851347.2, filed with the China National Intellectual Property Administration on December 29, 2023, and titled with "MCA FLAME-RETARDANT BLACK POLYAMIDE COMPOSITE MATERIAL CAPABLE OF HIGH-DEFINITION LASER MARKING, PREPARATION METHOD THEREFOR, AND USE THEREOF", which is hereby incorporated by reference in its entirety.

### FIELD

The present disclosure relates to the field of polymer compositions, and relates to a polyamide composite material, a preparation method thereof and use thereof, and particularly relates to a polyamide composite material, a MCA flame-retardant black polyamide composite material capable of high-definition laser marking, preparation method thereof and use thereof.

### BACKGROUND

The polyamide composite material is a high-performance material prepared by using polyamide as a matrix resin and adding composite materials such as carbon fiber, glass fiber, and aramid fiber. The polyamide composite material possesses excellent properties such as high strength, high rigidity, low density, corrosion resistance, and heat resistance, and is widely applied in the fields of aerospace, automotive transportation, electronics, and medicine.

With the advancement of technology, the performance requirements for polyamide composite materials are continuously increasing. It is therefore necessary to increase the filling content of the composite material so as to improve the mechanical properties of the material, reduce the water absorption of polyamide to enhance the dimensional and performance stability of the material, and obtain high heat resistance and other properties. However, high filling tends to reduce the flame-retardant performance of the material, and conventional nitrogen-based flame retardants (halogen-free flame retardants) cannot achieve a high glow-wire flammability index

(GWFI) requirement, such as passing 960°C test. In order to improve flame-retardant performance, it is necessary to further increase the amount of MCA flame retardant in the material. However, on the one hand, the MCA flame retardant is more prone to precipitation; on the other hand, as the proportion of the flame retardant increases, the proportion of other components decreases correspondingly, thereby reducing other performances of the product.

On the other hand, melamine cyanurate (MCA) flame-retardant polyamide composite have advantages such as excellent mechanical properties, high flame-retardant performance, low smoke density, and a comparative tracking index (CTI, also referred to as the comparative leakage tracking index) of up to 600 V, and can therefore be widely applied in the industries of low-voltage electrical apparatus, electronics and electrical appliances, and household appliances. Particularly, in the fields of low-voltage electrical apparatus and 5G, the housing materials are required to be laser-markable.

Laser marking is a novel marking technology controlled by a computer, having advantages of high marking speed, convenient operation, environmental friendliness, and low production cost. It mainly utilizes a high-energy-density laser beam irradiating on the surface of a target material to cause a physical or chemical change, thereby forming visible characters, patterns, symbols, bar codes, or images. At present, halogen-free flame-retardant polyamide composites are mainly marked by ultraviolet laser marking machines. Among them, black nitrogen-phosphorus flame-retardant polyamide materials can be used in the field of 5G 1U circuit breakers due to their excellent laser marking performance; however, nitrogen-phosphorus flame retardants are expensive, and there is currently a demand in the market for more economical substitute materials. MCA is a white crystalline solid, a nitrogen-containing halogen-free and environmentally friendly flame retardant, and can also be used as a solid lubricant. It has advantages of low toxicity, low smoke generation, and low cost. However, when MCA is incorporated in carbon-black modified polyamide composites, the marking result suffers from yellowing of the marks or poor marking clarity arise, thereby limiting its application.

The conventional art has improved the marking effect by two different methods: graphene masterbatches and high-viscosity resins. However, the method using graphene masterbatches does not disclose the effect on CTI, and graphene itself is expensive, resulting in high industrial production cost. The method using high-viscosity resin, such as resin with a relative viscosity of 2.8 or 3.2, in some cases does not describe the flame-retardant performance of the composite, and in other cases requires the addition of flame-retardant synergists and laser marking auxiliaries to achieve the claimed improvement in marking performance. However, the use of high-viscosity resin causes poor flowability of the system, resulting in severe fiber floating on the appearance surface during injection molding, and the addition of other flame-retardant synergists or laser marking auxiliaries further leads to high cost of the composite material.

### SUMMARY

The present disclosure is intended to improve the flame-retardant performance and precipitation problems under the premise of high filling amount in the conventional art, and provides a polyamide composite material, which is specifically realized through the following technical solution.

A polyamide composite material, comprising the following components in parts by weight:

| | |
|---|---|
| polyamide resin | 47 parts to 74 parts; |
| glass fiber | 20 parts to 40 parts; |
| MCA flame retardant | 5 parts to 13 parts; |
| lubricant | 0.2 parts to 1 part; |
| antioxidant | 0 parts to 1 part; |

wherein the MCA has an average particle size of 6 µm to 10 µm.

The present application unexpectedly finds that by applying MCA with a large average particle size, the addition amount of MCA can be reduced without affecting the flame-retardant performance of the material.

Optionally, the polyamide resin is one or more selected from the group consisting of PA6, PA66, PA6/66, or PA66/6 with a relative viscosity of 2.0 to 2.5.

Optionally, based on parts by weight, the content of glass fiber is 30 to 40 parts, or 25 to 35 parts, and may specifically be 30, 31, 32, 33, 34, 35, 36, 37, 38, 39, or 40 parts.

Optionally, based on parts by weight, the content of the MCA flame retardant is 6 to 10 parts. Furthermore, the content of the MCA flame retardant is 7 to 10 parts, and may specifically be 5, 6, 7, 8, 9, 10, 11, 12, or 13 parts.

Optionally, the polyamide composite material comprises the following components in parts by weight:

| | |
|---|---|
| polyamide resin | 47 parts to 64 parts; |
| glass fiber | 30 parts to 40 parts; |
| MCA flame retardant | 6 parts to 10 parts; |
| lubricant | 0.2 parts to 1 part; |
| antioxidant | 0 parts to 1 part. |

Optionally, the polyamide composite material comprises the following components in parts by weight:

| | |
|---|---|
| polyamide resin | 47 parts to 64 parts; |
| glass fiber | 25 parts to 35 parts; |
| mineral powder | 5 parts to 15 parts; |
| MCA flame retardant | 6 parts to 10 parts; |
| lubricant | 0.2 parts to 1 part; |
| antioxidant | 0 parts to 1 part. |

Optionally, the total parts by weight of the glass fiber and mineral powder is ≤45 parts.

Optionally, the glass fiber is an alkali-free glass fiber.

Optionally, the lubricant comprises one or more of ethylene bis-stearamide, calcium stearate, and ethylene bis-stearamide modifier.

Optionally, the antioxidant comprises one or more of hindered phenols and phosphite esters.

Optionally, the antioxidant is a mixture of antioxidant S 9228 and antioxidant 1098 at a mass ratio of 1:1 to 1:3.

Optionally, the polyamide composite material further comprises 0.02 to 0.1 parts by weight of a pigment.

Optionally, the pigment comprises one or more of ultramarine blue, cobalt blue, and phthalocyanine blue. As a complementary colorant, the blue pigment can neutralize the yellowing and reddening phenomena of laser marking caused by thermal discoloration of the resin, thereby making the marking appear whiter.

Optionally, the blue pigment is a compound pigment of ultramarine blue and phthalocyanine blue at a mass ratio of 1:1 to 1:3. The compound pigment can further improve the high-temperature yellowing resistance of the material during processing.

Optionally, the mineral powder comprises one or more of talcum powder, ground glass fiber, glass microspheres, wollastonite, mica, kaolinite, and montmorillonite.

The present disclosure also provide a method for preparing the above-mentioned composite material, comprising a blending step:
A: melting and shear blending components except MCA in a screw extruder according to raw material formulation to obtain a pre-dispersed system; and
B: adding MCA into the pre-dispersed system, and subjecting the mixture to shear blending in a screw extruder to obtain a well-dispersed composite material melt.

The preparation method of the present disclosure greatly reduces the precipitation problem of the MCA flame retardant, and there is no need to add anti-precipitation auxiliaries.

On the other hand, under conventional circumstances, in order to achieve better dispersion of the flame retardant MCA, improve the flame-retardant performance of the material, and reduce the amount of MCA required to meet the flame-retardant requirements, MCA is preferably added together with other components into a screw extruder to prepare the composite material. However, the applicant unexpectedly found that MCA exhibits a lubricating effect; after the addition of the MCA flame retardant, the shearing degree of the glass fiber is reduced, resulting in longer retained glass fibers in the system, which in turn leads to a decrease in flame-retardant performance, and meanwhile, the dispersion uniformity of the glass fiber is also reduced due to the lubrication, causing instability in the flame-retardant performance of the parts. The present disclosure provide a special preparation method, which does not affect the shearing of the glass fiber, resulting in shorter glass fibers and more uniform dispersion in the final material, thereby achieving more stable flame-retardant performance.

Optionally, in the blending step, step A and step B are respectively performed at a main feeding port and a side feeding port of the same screw extruder.

Optionally, in the blending step, step A and step B are respectively performed in different screw extruders.

The present disclosure provide a use of a composite material according to any one of the above technical solutions in laser-markable black-to-white parts in the fields of low-voltage electrical apparatus and 5G circuit breakers.

Furthermore, the present disclosure provides a use of the above-mentioned composite material in parts in the field of low-voltage electrical apparatus.

The present disclosure, by using MCA with a large average particle size, can achieve comparable flame-retardant performance even with a reduced addition amount, while simultaneously solving the flame-retardant performance and precipitation problems caused by high filling, thereby achieving unexpected technical effects.

On the other hand, the present disclosure is intended to address the issues in conventional MCA flame-retardant black polyamide materials, such as insufficient base blackness and yellowing or unclear laser markings, and to provide a polyamide composite material with high clarity of black-to-white laser marking, high CTI, excellent flame-retardant performance, mechanical properties, and processability. The present disclosure is specifically realized through the following technical solution.

A MCA flame-retardant black polyamide composite material capable of high-definition laser marking, comprising the following components in parts by weight:

| | |
|---|---|
| polyamide resin | 50 parts to 74 parts; |
| glass fiber | 20 parts to 40 parts; |
| MCA flame retardant | 5 parts to 13 parts; |
| carbon black | 0.1 parts to 0.5 parts; |
| lubricant | 0.2 parts to 0.6 parts; |
| antioxidant | 0 parts to 0.5 parts; |

wherein the polyamide resin is one or both of PA6 and PA66 having a relative viscosity of 2.0 to 2.4, and the MCA has an average particle size of 6 µm to 10 µm.

Optionally, based on parts by weight, the content of the glass fiber is 20 to 40 parts. Furthermore, the content of the glass fiber is 30 to 40 parts, and may specifically be 20, 21, 22, 23, 24, 25, 26, 27, 28, 29, 30, 31, 32, 33, 34, 35, 36, 37, 38, 39, or 40 parts.

Optionally, based on parts by weight, the content of the MCA flame retardant is 6 to 10 parts. Furthermore, the content of the MCA flame retardant is 7 to 10 parts, and may specifically be 5, 6, 7, 8, 9, 10, 11, 12, or 13 parts.

Optionally, the MCA flame-retardant black polyamide composite material capable of high-definition laser marking comprises the following components in parts by weight:

| | |
|---|---|
| polyamide resin | 50 parts to 74 parts; |
| glass fiber | 20 parts to 40 parts; |
| MCA flame retardant | 6 parts to 10 parts; |
| carbon black | 0.1 parts to 0.5 parts; |
| lubricant | 0.2 parts to 0.6 parts; |
| antioxidant | 0 parts to 0.5 parts; |

wherein the polyamide resin is one or both of PA6 and PA66 having a relative viscosity of 2.0 to 2.4, and the MCA has an average particle size of 5 µm to 10 µm, more preferably 6 µm to 10 µm.

Optionally, the composite material comprises in parts by weight:

| | |
|---|---|
| polyamide resin | 50 parts to 74 parts; |
| glass fiber | 20 parts to 40 parts; |
| MCA flame retardant | 6 parts to 10 parts; |
| carbon black | 0.1 parts to 0.5 parts; |
| lubricant | 0.2 parts to 0.6 parts; |
| antioxidant | 0 parts to 0.5 parts. |

Optionally, the composite material comprises in parts by weight:

| | |
|---|---|
| polyamide resin | 50 parts to 74 parts; |
| glass fiber | 25 parts to 35 parts; |
| mineral powder | 5 parts to 15 parts; |
| MCA flame retardant | 6 parts to 10 parts; |
| carbon black | 0.1 parts to 0.5 parts; |
| lubricant | 0.2 parts to 0.6 parts; |
| antioxidant | 0 parts to 0.5 parts. |

Optionally, the total parts by weight of the glass fiber and mineral powder is ≤45 parts.

When MCA is used as a flame retardant, a smaller average particle size (for example, an average particle size or D50 of about 1 µm to 3 µm) results in a larger specific surface area and better flame retardant performance. To meet the same flame-retardant requirements, the required amount of MCA is thus reduced, thereby improving the processing and precipitation problems caused by addition of large parts of MCA. Therefore, in the conventional art, it is generally believed that MCA with a smaller average particle size has better flame-retardant and precipitation performance than MCA with a larger average particle size, and is thus preferred. However, the applicant unexpectedly found during actual application that MCA also has a certain lubricating effect; the use of conventional MCA with a small average particle size and good flame-retardant performance leads to poor dispersion of carbon black, resulting in instability of the background color; since carbon black serves as a laser marking auxiliary, poor dispersion causes poor overall marking performance; in addition, as carbon black also acts as a black pigment, poor dispersion tends to cause the final marking effect to be darker or have other color deviation problems. The present disclosure solves the above problems by adopting MCA with an average particle size of 6 µm to 10 µm.

On the other hand, the applicant unexpectedly found that MCA exhibits a lubricating effect; after the addition of the MCA flame retardant, the shearing degree of the glass fiber is reduced, resulting in longer retained glass fibers in the system, which in turn leads to a decrease in flame-retardant performance and the dispersion uniformity of the glass fiber. The present disclosure reduces the shearing effect on the glass fiber by adopting side feeding of MCA, resulting in shorter glass fiber length and more uniform dispersion in the final material, thereby achieving more stable flame-retardant performance.

Optionally, the ratio of the MCA flame retardant to the carbon black is (15:1) to (40:1).

Optionally, the glass fiber is alkali-free glass fiber.

Optionally, the carbon black is medium- to high-pigment carbon black. It can further improve the blackness of the background material, thereby enhancing the overall black depth of the material.

Optionally, the lubricant comprises one or more of ethylene bis-stearamide, calcium stearate, and ethylene bis-stearamide modifier.

Optionally, the antioxidant comprises one or more of hindered phenols and phosphite esters.

Optionally, the antioxidant is a mixture of antioxidant S 9228 and antioxidant 1098 at a mass ratio of 1:1 to 1:3.

Optionally, the mineral powder comprises one or more of talcum powder, ground glass fiber, glass microspheres, wollastonite, mica, kaolinite, and montmorillonite.

Optionally, the polyamide composite material further comprises 0.02 to 0.1 parts by weight of a pigment.

Optionally, the pigment comprises one or more of ultramarine blue, cobalt blue, and phthalocyanine blue. As a complementary colorant, the blue pigment can neutralize the yellowing and reddening phenomena of laser marking caused by thermal discoloration of the resin, thereby making the marking appear whiter.

Optionally, the blue pigment is a compound pigment of ultramarine blue and phthalocyanine blue at a mass ratio of 1:1 to 1:3. The compound pigment can further improve the high-temperature yellowing resistance of the material during processing.

The present disclosure also provide a method for preparing the composite material according to any one of the above technical solutions, comprising a blending step:
A: melting and shear blending components except MCA in a screw extruder according to raw material formulation to obtain a pre-dispersed system; and
B: adding MCA into the pre-dispersed system, and subjecting the mixture to shear blending in a screw extruder to obtain a well-dispersed composite material melt.

Optionally, in the blending step, step A and step B are respectively performed at a main feeding port and a side feeding port of the same screw extruder.

Optionally, in the blending step, step A and step B are respectively performed in different screw extruders.

The present disclosure provides a use of the composite material according to any one of the above technical solutions in laser-markable black-to-white parts in the fields of low-voltage electrical apparatus and 5G circuit breakers.

Compared with the conventional art, the present disclosure selects a low-viscosity polyamide resin to ensure excellent processing fluidity, and improves the non-uniform dispersion problem that occurs when MCA and carbon black are used together through the selection of formulation components, thereby reducing the adverse effect of the lubricating action of MCA on the dispersion of carbon black and enhancing the flame retardant performance and high CTI performance of the material. Consequently, under the premise of good flame-retardant performance and high CTI, better high-definition black-to-white laser marking performance is achieved. The present disclosure achieves high-definition black-to-white laser marking without adding expensive laser marking agents, graphene, or the like, thus the cost is low.

### BRIEF DESCRIPTION OF DRAWINGS

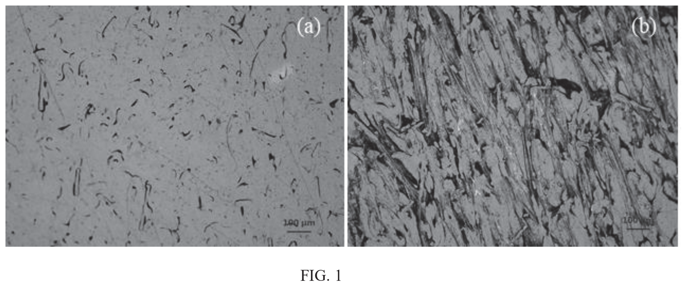

FIG. 1 is optical microscope photographs of the surface of the housings of Example 1 (left in FIG. 1) and Comparative Example 3 (right in FIG. 1).

### DETAILED DESCRIPTION

The specific embodiments of the present disclosure are described in detail below through examples. However, the specific embodiments are not intended to limit the technical solution of the present disclosure. Any non-substantive modifications, such as common technical substitutions made by those skilled in the art based on the technical solution described in the embodiments of the present disclosure, shall fall within the protection scope of the present disclosure.

In the present disclosure, the polyamide resin may comprise, in addition to PA6 and PA66, PA6/66 or PA66/6.

In the present disclosure, PA6/66 is also referred to as copolymerized polyamide 6, copolymerized polyamide 6 resin, or polyamide 6/66, which is obtained by mixing and polymerizing the polymerization monomers or pre-polymers of PA6 with the polymerization monomers or pre-polymers of PA66 during the synthesis stage, wherein the proportion of the polymerization monomers or pre-polymers of PA6 is relatively higher.

PA66/6 is basically the same as PA6/66, except that the proportion of the polymerization monomers or pre-polymers of PA66 is relatively higher.

In the following specific embodiments, the raw materials used are as shown below, which, however, are not intended to limit the sources of the products.
PA6/CSR/OS, from Guangdong Xinhui Meida Nylon Co., Ltd., with relative viscosity of 1.8
PA6/M2000, from Guangdong Xinhui Meida Nylon Co., Ltd., with relative viscosity of 2.0
PA6/M2400, from Guangdong Xinhui Meida Nylon Co., Ltd., with relative viscosity of 2.4
PA6/M2800, from Guangdong Xinhui Meida Nylon Co., Ltd., with relative viscosity 2.8
PA6/M3200, from Guangdong Xinhui Meida Nylon Co., Ltd., with relative viscosity of 3.2
PA66/EPR24, from Shenma Industrial Co., Ltd., with relative viscosity of 2.4
PA6/66, from Hangzhou Juheshun New Materials Co., Ltd., with Relative viscosity of 2.5

Glass fiber 560A, from China Jushi Co., Ltd.

Ground glass fiber (glass fiber powder), with 300 mesh, from Wuhu Chuangsumei New Material Technology Co., Ltd.
Flame retardant MCA-F, from Sichuan Institute of Fine Chemical Industry Research and Design, with average particle size of 6 µm to 10 µm
Flame retardant MCA-12, from Sichuan Institute of Fine Chemical Industry Research and Design, with average particle size of 1 µm to 3 µm
Carbon black BLACK PEARLS 800, from Cabot Corporation (USA), medium- to high-pigment carbon black
Antioxidant 1098, from Tianjin Rianlon Corporation
Antioxidant S9228, from Dover Chemical Corporation (USA)

Lubricant calcium stearate, from Hangzhou Grease Chemical Co., Ltd.

Ultramarine blue 8008, from Wenzhou Best Fine Pigment Chemical Co., Ltd.
Copper phthalocyanine K6907, from BASF SE (Germany)

The compositions and performances of the examples and comparative examples are shown in Tables 1, 2, and 3, respectively. The units of all components in the tables are parts by weight.

It should be noted that, in all examples and comparative examples, the antioxidant comprises 0.2 parts of antioxidant 1098 and 0.2 parts of antioxidant S9228, and the lubricant comprises 0.25 parts of calcium stearate. However, the protection scope of the present disclosure is not limited thereof, and those skilled in the art may make conventional adjustments as needed.

Preparation of the resin composition:
Example 1-12: The blending steps were comprised.

A: According to the components of each specific example, all components except MCA were melted and shear-blended in a screw extruder to obtain a pre-dispersed system. The state of the pre-dispersed system comprised a molten state, a plastic pellet state, or other processed billet or formed body state, without substantially affecting the melt components. B: The MCA was then added into the pre-dispersed system and subjected to shear-blending in a screw extruder to obtain a well-dispersed composite melt. The resulting melt was further extruded, cooled, and pelletized to prepare plastic pellets. Those skilled in the art may also process the plastic pellets into other finished or semi-finished states, such as billets or formed bodies, which are considered equivalent to the plastic pellets.

Specifically, in the present embodiment, in the blending step, step A and step B were respectively performed in different screw extruders.

In other embodiments, step A and step B were respectively performed at a main feeding port and a side feeding port of the same screw extruder.

In the above steps, the extruder had a length-to-diameter ratio of 50:1. Specifically, the extruder had a main screw rotation speed of 400 rpm to 450 rpm. The temperature of each zone was set as follows: Zone 1: 40 °C to 60 °C; Zones 2-5: 210 °C to 230 °C; Zones 6-8: 200 °C to 220 °C; and Zones 9-10: 210 °C to 230 °C. Those skilled in the art may select ascrew extruder with a length-to-diameter ratio in the range of 40:1 to 50:1 according to practical requirements.

It should be noted that the basic operations of melting, blending, extrusion and pelletizing are conventional means used by those skilled in the art in plastic processing. The screw configuration and processing parameters can be set according to the components to be processed, and thus need not be further described.

Comparative Example 4: According to the proportion of each component, all components were uniformly mixed and added from the main feeding port of the screw extruder. After melting, blending, extrusion and pelletizing, MCA flame-retardant polyamide composite material pellets were obtained.

In the above steps, the extruder had a length-to-diameter ratio of 50:1, and had a main screw speed of 400 rpm to 450 rpm. The temperature of each zone was set as follows: Zone 1: 40 °C to 60 °C, Zones 2-5: 210 °C to 230 °C, Zones 6-8: 200 °C to 220 °C, and Zones 9-10: 210 °C to 230 °C.

Comparative Example 8: According to the proportion of each component, all components except carbon black were uniformly mixed and added from the main feeding port of the twin-screw extruder. After melting, blending, extrusion and pelletizing, carbon black-free MCA flame-retardant polyamide composite material was obtained.

The dried pellets of the carbon black-free MCA flame-retardant polyamide composite material and carbon black were then respectively added into the main feeding port of the twin-screw extruder and subjected again to melting, blending, extrusion and pelletizing to obtain MCA flame-retardant black polyamide composite material.

In the above steps, the extruder had a length-to-diameter ratio of 50:1, and had a main screw speed of 400 rpm to 450 rpm. The temperature of each zone was set as follows: Zone 1: 40 °C to 60 °C, Zones 2-5: 210 °C to 230 °C, Zones 6-8: 200 °C to 220 °C, and Zones 9-10: 210 °C to 230 °C.

The preparation methods of the remaining comparative examples refer to Examples 1-12.

Performance characterization and testing methods of the composite materials are as follows:

Preparation of test specimens: The pellets of each example and comparative example were dried in an oven at a temperature of 110°C for a duration of 4 hours to 6 hours, and then injection-molded into standard test specimens at a temperature of 255°C to 265°C according to the respective standard requirements, for laser marking and other related performance tests. The laser marking contrast and laser marking effect tests were performed by testing the performance of laser-marked color plates.

Mechanical properties: The tensile strength was tested in accordance with ISO 527-1:2012 using a universal material testing machine. The charpy unnotched impact strength was tested in accordance with ISO 179-1:2010 using an electronic impact testing machine.

Flame retardant properties: The glow-wire flammability index (GWFI) was tested in accordance with IEC 60695-11-20:2015 at a test temperature of 960°C, using a glow-wire testing machine.

Electrical properties: The comparative tracking index (CTI) was tested in accordance with IEC 60112:2009 using a tracking testing machine.

Thermal properties: The heat deflection temperature (HDT) was tested in accordance with GB/T 1634.1-2019 using an automatic Vicat heat deflection testing machine.

Laser marking: Laser marking tests were carried out using the UV-3C ultraviolet laser marking machine manufactured by Han's Laser Technology Industry Group Co., Ltd., with a marking speed of 800 mm/sec.

Laser marking contrast (ΔL): A CM-36dG colorimeter manufactured by Konica Minolta was used to measure the color difference values of the marked area (L2) and the unmarked area (L1). The contrast was calculated according to ΔL = L2 - L1.

Laser marking effect: The laser marking effect was evaluated visually and graded as excellent, good, yellowish, reddish-yellow, or dark.

Appearance rating of injection-molded product: The surface fiber-floating condition of the color plates was observed using an optical microscope, which can be divided into four grades: grade 1: High surface finish, no fiber floating or agglomeration; grade 2: High surface finish, a small amount of fiber floating but no agglomeration; grade 3: Moderate surface finish, more fiber floating or a small amount of agglomeration; grade 4: Poor surface finish, a large amount of fiber floating or a large amount of agglomeration.

**Table 1 Components and performance of Example 1-12**

| Components and performance | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|
| PA6 /M2000 | | | | | 55 | 47 | 33 | 33 | | 64 | 30 | |
| PA6/M2400 | 74 | 70 | 54 | 50 | | | 34 | 34 | 63 | | | |
| PA66/EPR24 | | | | | | | | | | | 31 | 60 |
| PA6/CSR/OS | | | | | | | | | | | | |
| PA6M2800 | | | | | | | | | | | | |
| PA6M3200 | | | | | | | | | | | | |
| Glass fiber | 20 | 20 | 40 | 40 | 40 | 40 | 25 | 25 | 30 | 30 | 30 | 30 |
| 560A | | | | | | | | | | | | |
| Flame retardant MCA-F | 6 | 10 | 6 | 10 | 5 | 13 | 8 | 8 | 7 | 6 | 9 | 10 |
| Flame retardant MCA-12 | | | | | | | | | | | | |
| Carbon black | 0.35 | 0.35 | 0.35 | 0.35 | 0.35 | 0.35 | 0.1 | 0.5 | 0.35 | 0.2 | 0.35 | 0.35 |
| Lubricant / Calcium stearate | 0.25 | 0.25 | 0.25 | 0.25 | 0.25 | 0.25 | 0.25 | 0.25 | 0.25 | 0.25 | 0.25 | 0.25 |
| Antioxidant 1098 | 0.2 | 0.2 | 0.2 | 0.2 | 0.2 | 0.2 | 0.2 | 0.2 | 0.2 | 0.2 | 0.2 | 0.2 |
| Antioxidant 9228 | 0.2 | 0.2 | 0.2 | 0.2 | 0.2 | 0.2 | 0.2 | 0.2 | 0.2 | 0.2 | 0.2 | 0.2 |
| Ultramarine blue 8008 | 0.02 | 0.02 | 0.02 | 0.02 | 0.02 | 0.02 | 0.02 | 0.02 | 0.02 | 0.02 | 0.02 | 0.02 |
| Phthalocyanin e blue K6907 | 0.04 | 0.04 | 0.04 | 0.04 | 0.04 | 0.04 | 0.04 | 0.04 | 0.04 | 0.04 | 0.04 | 0.04 |
| Tensile strength (KJ/m²) | 86 | 85 | 109 | 111 | 108 | 112 | 90 | 89 | 95 | 94 | 98 | 105 |
| Unnotched impact strength (MPa) | 46 | 44 | 55 | 53 | 44 | 42 | 45 | 47 | 49 | 40 | 35 | 38 |
| GWFI / 960°C | Pass | Pass | Pass | Pass | Not stable | Pass | Pass | Pass | Pass | Pass | Pass | Pass |
| CTI (V) | 550 | 550 | 550 | 550 | 550 | 550 | 550 | 525 | 550 | 550 | 550 | 550 |
| Heat deflection temperature HDT (°C) | 165 | 167 | 203 | 206 | 201 | 206 | 178 | 182 | 191 | 191 | 202 | 198 |
| Color difference values of the unmarked area L1 | 26.6 | 26.8 | 26.9 | 27.1 | 26.9 | 27.2 | 27.4 | 26.3 | 26.7 | 27 | 26.8 | 26.81 |
| Color difference values of the marked area L2 | 70.6 | 70.4 | 70.5 | 70.3 | 70 | 69.7 | 70.8 | 68.8 | 70.4 | 70.8 | 70.3 | 70.31 |
| Laser marking contrast ΔL | 44.1 | 43.6 | 43.7 | 43.3 | 43.1 | 42.5 | 43.4 | 42.5 | 43.7 | 43.8 | 43.5 | 43.5 |
| Laser marking effect | Excellent | Excellent | Excellent | Good | Good | Good | Good | Good | Excellent | Excellent | Excellent | Excellent |
| Appearance rating of injection-molded product | Grade1 | Grade1 | Grade2 | Grade2 | Grade2 | Grade2 | Grade1 | Grade1 | Grade2 | Grade2 | Grade2 | Grade2 |

**Table 2 Components and performance of Comparative Example 1-13**

| Components and performance | Comparative example 1 | Comparative example 2 | Comparative example 3 | Comparative example 4 | Comparative example 5 | Comparative example 6 | Comparative example 7 | Comparative example 8 | Comparative example 9 | Comparative example 10 | Comparative example 11 | Comparative example 12 | Comparative example 13 |
|---|---|---|---|---|---|---|---|---|---|---|---|---|---|
| PA6 /M2000 | | | | | | | | | 64 | 64 | 64 | | |
| PA6/M2 400 | | | | 74 | 74 | 57 | 66 | 74 | | | | 74 | 74 |
| PA66/EP R24 | | | | | | | | | | | | | |
| PA6/CS R/OS | 50 | | | | | | | | | | | | |
| PA6M28 00 | | 50 | | | | | | | | | | | |
| PA6M32 00 | | | 50 | | | | | | | | | | |
| Glass fiber 560A | 40 | 40 | 40 | 20 | 20 | 30 | 30 | 20 | 30 | 30 | 30 | 20 | 20 |
| Flame retardant MCA-F | 10 | 10 | 10 | 6 | | 14 | 4 | 6 | 6 | 6 | 6 | 6 | 6 |
| Flame retardant MCA-12 | | | | | 6 | | | | | | | | |
| Carbon black | 0.35 | 0.35 | 0.35 | 0.35 | 0.35 | 0.35 | 0.35 | 0.35 | 0.2 | 0.2 | 0.2 | 0.05 | 0.6 |
| Ultramarine blue 8008 | 0.02 | 0.02 | 0.02 | 0.02 | 0.02 | 0.02 | 0.02 | 0.02 | 0 | 0.02 | 0 | 0.02 | 0.02 |
| Phthaloc yanine blue K6907 | 0.04 | 0.04 | 0.04 | 0.04 | 0.04 | 0.04 | 0.04 | 0.04 | 0 | 0 | 0.04 | 0.04 | 0.04 |
| Tensile strength (KJ/m²) | 113 | 109 | 106 | 83 | 87 | 97 | 95 | 85 | 94 | 96 | 93 | 85 | 83 |
| Unnotched impact strength (MPa) | 37 | 55 | 58 | 45 | 47 | 44 | 45 | 44 | 39 | 40 | 41 | 45 | 44 |
| GWFI/ 960°C | Pass | Not Pass | Not Pass | Pass | Pass | Pass | Not Pass | Pass | Pass | Pass | Pass | Pass | Pass |
| CTI (V) | 550 | 550 | 550 | 525 | 550 | 550 | 550 | 550 | 550 | 550 | 550 | 550 | 525 |
| Heat deflection temperat | 210 | 208 | 205 | 163 | 168 | 190 | 191 | 162 | 191 | 192 | 190 | 167 | 163 |
| ure HDT (°C) | | | | | | | | | | | | | |
| Color difference values of the unmarked area L1 | 27.11 | 26.85 | 26.77 | 29.41 | 28.82 | 27.41 | 27.12 | 29.52 | 27.08 | 27.05 | 27.10 | 28.68 | 26.12 |
| Color difference values of the marked area L2 | 70.12 | 70.26 | 70.21 | 60.96 | 65.35 | 68.59 | 68.46 | 58.74 | 68.21 | 68.32 | 68.48 | 70.63 | 61.29 |
| Laser marking contrast ΔL | 43.01 | 43.41 | 43.44 | 31.55 | 36.53 | 41.18 | 41.34 | 29.22 | 41.13 | 41.27 | 41.38 | 41.95 | 35.17 |
| Laser marking effect | Good | Excellent | Excellent | Dark | Dark | yellowi sh | yellowi sh | Dark | reddish yellow | yellowi sh | yellowi sh | Good | Dark |
| Appearance rating of injection-molded product | Gradel | Grade4 | Grade4 | Gradel | Gradel | Grade2 | Grade2 | Gradel | Grade2 | Grade2 | Grade2 | Gradel | Gradel |

The test results shown in Table 1 and Table 2 indicate that obtaining an MCA flame-retardant black polyamide material with excellent comprehensive performance is related to multiple factors.

Compared with Example 3, Example 1 has a lower content of low-viscosity PA6 component, resulting in a relatively poorer appearance of the injection-molded product.

Compared with Example 4, Comparative Example 1-3 show that the viscosity of the polyamide resin has a significant influence on the impact performance, flame-retardant performance, and the appearance and laser marking effect of the injection-molded product.

In Comparative Example 4, the MCA flame retardant was mixed and melt-extruded together. Compared with Example 1, the background color difference increased, and the laser marking effect was poorer.

In Comparative Example 5, an MCA flame retardant with a different particle size was used. Compared with Example 1, the smaller particle size resulted in a relatively poorer laser marking effect.

Compared with Example 1, in Comparative Example 8, carbon black was extruded separately in steps, leading to poorer dispersion of carbon black in the matrix, resulting in a less black matrix and a darker laser marking effect.

FIG. 1 shows optical microscope photographs of the housing surfaces of Example 1 (left in FIG. 1) and Comparative Example 3 (right in FIG. 1), indicating that the dispersion of glass fibers in Example 1 is better than that in Comparative Example 3, and the floating-fiber appearance of Example 1 is effectively improved.

In the MCA flame-retardant polyamide system, under the specific preparation conditions of the embodiments, when used synergistically with carbon black at a certain ratio of (15:1) to (40:1), the laser marking contrast ΔL of the black nitrogen-based flame-retardant polyamide composite materials is all above 42, and the overall performance is good. In Example 5, when the amount of MCA is 5 parts, the test of GWFI at 960 °C cannot be stably passed; but it can still be used normally in some applications that do not require meeting the GWFI/960 °C standard.

The technical solution of the present disclosure imparts, to some extent, good processability and appearance performance. The composite material can be applied in fields such as low-voltage electrical apparatuses, electrical and electronic appliances, and household appliances.

Experimental data indicate that selecting a low-viscosity polyamide resin with good fluidity can improve the floating-fiber phenomenon of housings during the injection molding process. Selecting MCA particles with a larger size than those commonly used in conventional flame-retardant systems facilitates dispersion in the polyamide resin matrix, thereby achieving a better flame-retardant effect. For the same parts by weight of MCA, larger particle sizes result in smaller specific surface areas; under the same carbon black content, the base color of the molded part appears deeper blackness.

It should be noted that, in conventional polyamide MCA flame-retardant systems, the MCA used typically has a particle size of smaller than 3 µm, with a larger specific surface area and relatively low-cost.

Experimental data demonstrate that when the parts by weight of MCA are within the range of 6 parts to 10 parts. An insufficient addition of MCA leads to poor flame-retardant performance and failure to pass the GWFI 960 °C/1.5 mm test, while an excessive addition of MCA affects the blackness of the polyamide matrix. The amount of carbon black significantly influences the blackness of the matrix and the laser marking performance: an insufficient addition of carbon black cannot render the matrix with satisfactory blackness, whereas an excessive addition of carbon black results in unclear laser marking. The use of a mixture of antioxidant S 9228 and antioxidant 1098 in a mass ratio of (1:1) to (1:3) can improve the resistance to high-temperature yellowing of the material during processing, thereby improving the yellowing problems of the molded products.

### Example 13-19

The blending steps were comprised.

A: According to the components of each specific example, all components except MCA were melted and shear-blended in a screw extruder to obtain a pre-dispersed system. The state of the pre-dispersed system comprised a molten state, a plastic pellet state, or other processed billet or formed body state, without substantially affecting the melt components. B: The MCA was then added into the pre-dispersed system and subjected to shear-blending in a screw extruder to obtain a well-dispersed composite melt. The resulting melt was further extruded, cooled, and pelletized to prepare plastic pellets. Those skilled in the art may also process the plastic pellets into other finished or semi-finished states, such as billets or formed bodies, which are considered equivalent to the plastic pellets.

Specifically, in the present embodiment, in the blending step, step A and step B were respectively performed at a main feeding port and a side feeding port of the same screw extruder.

In the above steps, the extruder had a length-to-diameter ratio of 50:1. Specifically, the extruder had a main screw rotation speed of 400 rpm to 450 rpm. The temperature of each zone was set as follows: Zone 1: 40 °C to 60 °C; Zones 2-5: 210 °C to 230 °C; Zones 6-8: 200 °C to 220 °C; and Zones 9-10: 210 °C to 230 °C. Those skilled in the art may select a screw extruder with a length-to-diameter ratio in the range of 40:1 to 50:1 according to practical requirements.

It should be noted that the basic operations of melting, blending, extrusion and pelletizing are conventional means used by those skilled in the art in plastic processing. The screw configuration and processing parameters can be set according to the components to be processed, and thus need not be further described.

The preparation methods of Comparative Example 14 and 15 refer to that of Comparative Example 4. The preparation methods of the remaining comparative examples refer to Example 13-19.

The performance characterization and testing methods of the composite materials are the same as those described in Example 1-12.

**Table 3 Components and performance of Example 13-19 and Comparative Example 14-17**

| Components and performance | Example | | | | | | | Comparative Example | | | |
|---|---|---|---|---|---|---|---|---|---|---|---|
| | 13 | 14 | 15 | 16 | 17 | 18 | 19 | 14 | 15 | 16 | 17 |
| PA6/M2400 | 54 | | 55 | 54 | 49 | 49 | 54 | 54 | 53 | 53 | 64 |
| PA6/66 | | 54 | | | | | | | | | |
| Glass fiber 560A | 40 | 40 | 40 | 35 | 30 | 35 | 25 | 40 | 40 | 40 | 30 |
| Ground glass fiber 300 mesh | | | | 5 | 15 | 10 | 15 | | | | |
| Flame retardant MCA-F | 6 | 6 | 5 | 6 | 6 | 6 | 6 | 6 | 7 | | |
| Flame retardant MCA-12 | | | | | | | | | | 7 | 6 |
| Lubricant / Calcium stearate | 0.25 | 0.25 | 0.25 | 0.25 | 0.25 | 0.25 | 0.25 | 0.25 | 0.25 | 0.25 | 0.25 |
| Antioxidant 1098 | 0.2 | 0.2 | 0.2 | 0.2 | 0.2 | 0.2 | 0.2 | 0.2 | 0.2 | 0.2 | 0.2 |
| Antioxidant 9228 | 0.2 | 0.2 | 0.2 | 0.2 | 0.2 | 0.2 | 0.2 | 0.2 | 0.2 | 0.2 | 0.2 |
| Ultramarine blue 8008 | 0.02 | 0.02 | 0.02 | 0.02 | 0.02 | 0.02 | 0.02 | 0.02 | 0.02 | 0.02 | 0.02 |
| Phthalocyanine blue K6907 | 0.04 | 0.04 | 0.04 | 0.04 | 0.04 | 0.04 | 0.04 | 0.04 | 0.04 | 0.04 | 0.04 |
| Tensile strength (KJ/m²) | 111 | 112 | 110 | 106 | 105 | 109 | 101 | 113 | 113 | 112 | 97 |
| Unnotched impact strength (MPa) | 56 | 55 | 56 | 51 | 46 | 48 | 47 | 58 | 57 | 56 | 42 |
| GWFI/960°C 1.0mm | Pass | Pass | GWFI/ 960°C 2.0mm Pass | Pass | Pass | Pass | Pass | Not Pass | Not Pass | Not Pass | Not Pass |
| CTI (V) | 600 | 600 | 600 | 600 | 600 | 600 | 600 | 600 | 600 | 600 | 600 |
| Heat deflection temperature HDT (°C) | 204 | 202 | 201 | 201 | 199 | 200 | 197 | 207 | 207 | 206 | 193 |

The test results shown in Table 3 indicate that by adopting MCA with a large average particle size of 6 µm to 10 µm, the amount of MCA added can be reduced without influencing the flame-retardant performance of the material. Specifically:

In Example 13, with the addition of 40 parts of glass fiber and 6 parts of MCA, the composite material achieves the technical effect of passing test of GWFI/960 °C at 1.0 mm, which is unexpected for those skilled in the art.

In Example 15, with the addition of 40 parts of glass fiber and 5 parts of MCA, the composite material achieves the technical effect of passing test of GWFI/960 °C at 2.0 mm, which is also unexpected for those skilled in the art. Although test of GWFI/960 °C at 1.0 mm is not passed, for molded parts with relatively lower requirements, it still meets usage requirements and falls within the range of high flame-retardant performance.

In Example 15-19, by compounding glass fiber with mineral powder, even when the total amount of reinforcing fillers reaches as high as 45 parts, the composite material can achieve the technical effect of passing test of GWFI/960 °C at 1.0 mm with the addition of 6 parts of MCA.

In Comparative Example 14 and 15, due to limitations in their preparation methods, when 40 parts of glass fiber and 6 or 7 parts of MCA with an average particle size of 6 µm to 10 µm are added, the technical effect of passing test of GWFI/960 °C at 1.0 mm is not achieved. This further indicates that the conventional selections made by those skilled in the art cannot achieve the technical effect of the present disclosure, highlighting the unexpected technical effect of the present disclosure.

In Comparative Example 16 and 17, with 40 and 30 parts of glass fiber added, respectively, and 7 and 6 parts of MCA with smaller average particle sizes, the technical effect of passing test of GWFI/960 °C at 1.0 mm is also not achieved. Although the same preparation method as in the examples of the present disclosure is used, the smaller average particle size of MCA fails to achieve the same technical effect of the examples of the present application. This result is contrary to the common understanding in the art that, under the same addition amount, the smaller the average particle size of MCA and the larger the specific surface area, the better flame-retardant performance. Therefore, the present disclosure exhibits an unexpected technical effect.

## Claims

1. A polyamide composite material, comprising the following components in parts by weight:
| | |
|---|---|
| polyamide resin | 47 parts to 74 parts; |
| glass fiber | 20 parts to 40 parts; |
| MCA flame retardant | 5 parts to 13 parts; |
| lubricant | 0.2 parts to 1 part; |
| antioxidant | 0 parts to 1 part; |
wherein the MCA has an average particle size of 6 µm to 10 µm.

2. The composite material according to claim 1, comprising the following components in parts by weight:
| | |
|---|---|
| polyamide resin | 47 parts to 64 parts; |
| glass fiber | 30 parts to 40 parts; |
| MCA flame retardant | 6 parts to 10 parts; |
| lubricant | 0.2 parts to 1 part; |
| antioxidant | 0 parts to 1 part. |

3. The composite material according to claim 1, comprising the following components in parts by weight:
| | |
|---|---|
| polyamide resin | 47 parts to 64 parts; |
| glass fiber | 25 parts to 35 parts; |
| mineral powder | 5 parts to 15 parts; |
| MCA flame retardant | 6 parts to 10 parts; |
| lubricant | 0.2 parts to 1 part; |
| antioxidant | 0 parts to 1 part. |

4. A MCA flame-retardant black polyamide composite material capable of high-definition laser marking, comprising the following components in parts by weight:
| | |
|---|---|
| polyamide resin | 50 parts to 74 parts; |
| glass fiber | 20 parts to 40 parts; |
| MCA flame retardant | 5 parts to 13 parts; |
| carbon black | 0.1 parts to 0.5 parts; |
| lubricant | 0.2 parts to 0.6 parts; |
| antioxidant | 0 parts to 0.5 parts; |
wherein the polyamide resin is one or both of PA6 and PA66 having a relative viscosity of 2.0 to 2.4, and the MCA has an average particle size of 6 µm to 10 µm.

5. The composite material according to claim 4, comprising in parts by weight:
| | |
|---|---|
| polyamide resin | 50 parts to 74 parts; |
| glass fiber | 20 parts to 40 parts; |
| MCA flame retardant | 6 parts to 10 parts; |
| carbon black | 0.1 parts to 0.5 parts; |
| lubricant | 0.2 parts to 0.6 parts; |
| antioxidant | 0 parts to 0.5 parts. |

6. The composite material according to claim 5, comprising in parts by weight:
| | |
|---|---|
| polyamide resin | 50 parts to 74 parts; |
| glass fiber | 25 parts to 35 parts; |
| mineral powder | 5 parts to 15 parts; |
| MCA flame retardant | 6 parts to 10 parts; |
| carbon black | 0.1 parts to 0.5 parts; |
| lubricant | 0.2 parts to 0.6 parts; |
| antioxidant | 0 parts to 0.5 parts. |

7. The composite material according to any one of claims 4 to 6, wherein a ratio of the MCA flame retardant to the carbon black is (15:1) to (40:1).

8. The composite material according to any one of claims 1 to 6, wherein the glass fiber is alkali-free glass fiber.

9. The composite material according to any one of claims 4 to 6, wherein the carbon black is medium- to high-pigment carbon black.

10. The composite material according to any one of claims 1 to 6, wherein the lubricant comprises one or more of ethylene bis-stearamide, calcium stearate, and ethylene bis-stearamide modifier.

11. The composite material according to any one of claims 1 to 6, wherein the antioxidant comprises one or more of hindered phenols and phosphite esters.

12. The composite material according to any one of claims 1 to 6, wherein the antioxidant is a mixture of antioxidant S 9228 and antioxidant 1098 at a mass ratio of 1:1 to 1:3.

13. The composite material according to claim 3 or claim 6, wherein the mineral powder comprises one or more of talcum powder, ground glass fiber, glass microspheres, wollastonite, mica, kaolinite, and montmorillonite.

14. The composite material according to any one of claims 1 to 6, wherein the composite material further comprises 0.02 to 0.1 parts by weight of a pigment.

15. The composite material according to claim 14, wherein the pigment comprises one or more of ultramarine blue, cobalt blue, and phthalocyanine blue.

16. A method for preparing the composite material according to any one of claims 1 to 15, comprising a blending step:
A: melting and shear blending components except MCA in a screw extruder according to raw material formulation to obtain a pre-dispersed system; and
B: adding MCA into the pre-dispersed system, and subjecting the mixture to shear blending in a screw extruder to obtain a well-dispersed composite material melt.

17. The method according to claim 16, wherein, in the blending step, step A and step B are respectively performed at a main feeding port and a side feeding port of the same screw extruder.

18. The method according to claim 16, wherein, in the blending step, step A and step B are respectively performed in different screw extruders.

19. Use of the composite material according to any one of claims 1 to 15 in laser-markable black-to-white parts in the fields of low-voltage electrical apparatus and 5G circuit breakers.

20. Use of the composite material according to any one of claims 1 to 3 in parts in the field of low-voltage electrical apparatus.
